# EUROPEAN PATENT SPECIFICATION

(11) **EP 3 752 868 B1**
(45) Date of publication and mention of the grant of the patent: **24.09.2025**
(21) Application number: 19704333.4
(22) Date of filing: 13.02.2019
(51) Int. Cl.: G02B 1/115, G02C 7/10

(54) **MULTILAYER LENS FOR EYEGLASSES**
MEHRSCHICHTLINSE FÜR BRILLEN
LENTILLE MULTICOUCHE POUR LUNETTES

(30) Priority: 16.02.2018 IT 201800002744
(43) Date of publication of application: 23.12.2020
(73) Proprietor: Luxottica S.r.l., 32021 Agordo (IT)
(72) Inventor: DEGLI ANTONINI, Giorgio, 10036 Settimo Torinese (IT)
(74) Representative: Iannone, Carlo Luigi
(86) International application number: PCT/EP2019/053568
(87) International publication number: WO 2019/158596

(56) References cited:
- EP-A1- 3 203 274
- EP-A1- 3 511 768
- EP-A2- 2 033 019
- US-A- 3 516 720
- US-A- 4 045 125
- US-A1- 2011 043 748
- US-A1- 2013 258 278

## Description

The present invention relates to a multilayer lens for eyeglasses. More specifically, the invention relates to a plastic multilayer lens for eyeglasses.

As is known, multilayer lenses exist which contain a layer of precious metal inside them, such as gold or the like, in which the layer of precious metal is arranged toward the observer, i.e. in the position furthest from the eye of the wearer of the lens, with respect to a plastic substrate which constitutes the base element of the lens proper.

In other words, the layer of precious metal is deposited on the front side of the lens. Solutions of this type are known for example from EP2274648 and US8449109.

Plastic lenses with a layer of precious metal arranged on the outward side of the lens however have a number of drawbacks, including the fact that the layer of precious metal can be exposed to deterioration phenomena owing to rubbing, impact or aging.

Furthermore, lenses provided with a layer of precious metal also have a coating on the two mutually opposite faces of the lens, which is provided with a lacquer, and which causes unwanted iridescent effects.

In particular such lenses have an additional, scratch-resistant lacquer deposited on top of the layer of precious metal, which greatly compromises the cosmetic appearance of the precious metal owing to bothersome interference effects. US2013/258278 describes a lens comprising a polymeric substrate, a hardening layer and a metallic layer. Over the metallic layer there is a first high index refraction layer and a first low refraction index layer. The metal of the metallic layer may be silver. EP3511768 is prior art according to Article 54(3) EPC.

The aim of the present invention is to provide a multilayer lens for eyeglasses, which has at least one layer of precious metal that can be preserved from deterioration phenomena in general.

Within this aim, an object of the present invention is to provide a multilayer lens for eyeglasses in which the quality of the lens is improved with respect to conventional lenses.

Another object of the present invention is to provide a multilayer lens for eyeglasses, which makes it possible to give the lens, viewed externally, a "metallic" effect while retaining the solar filtering qualities.

Another object of the present invention is to provide a multilayer lens for eyeglasses that is highly reliable, easily and practically implemented and at low cost.

This aim and these and other objects which will become better apparent hereinafter are achieved by a multilayer lens according to claim 1.

Further characteristics and advantages of the invention will become better apparent from the description of preferred, but not exclusive, embodiments of the lens according to the invention, which are illustrated by way of non-limiting example in the accompanying drawings wherein:

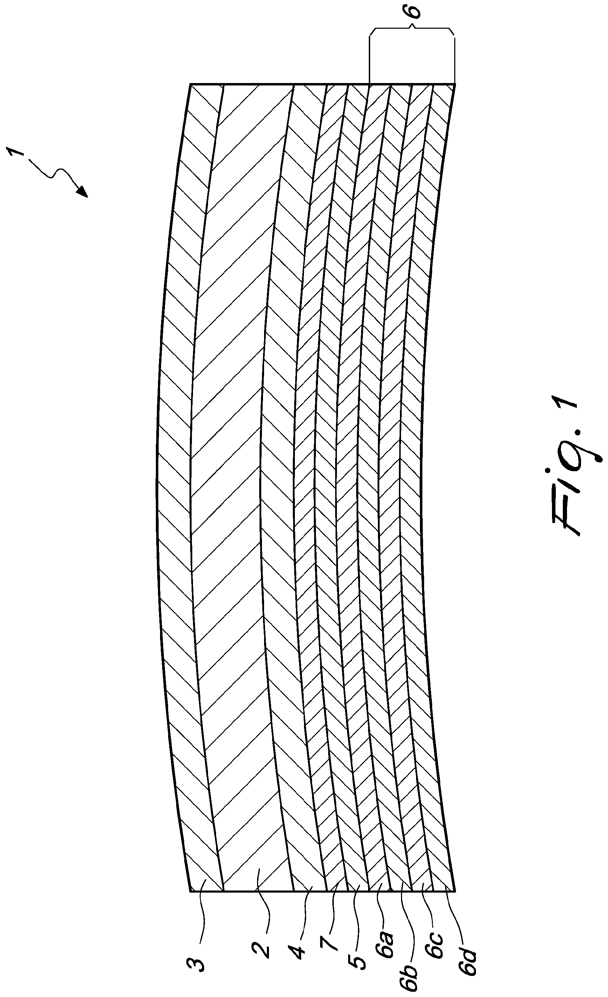

Figure 1 schematically illustrates a lens according to the present invention, according to a first embodiment useful to understand the claimed invention;

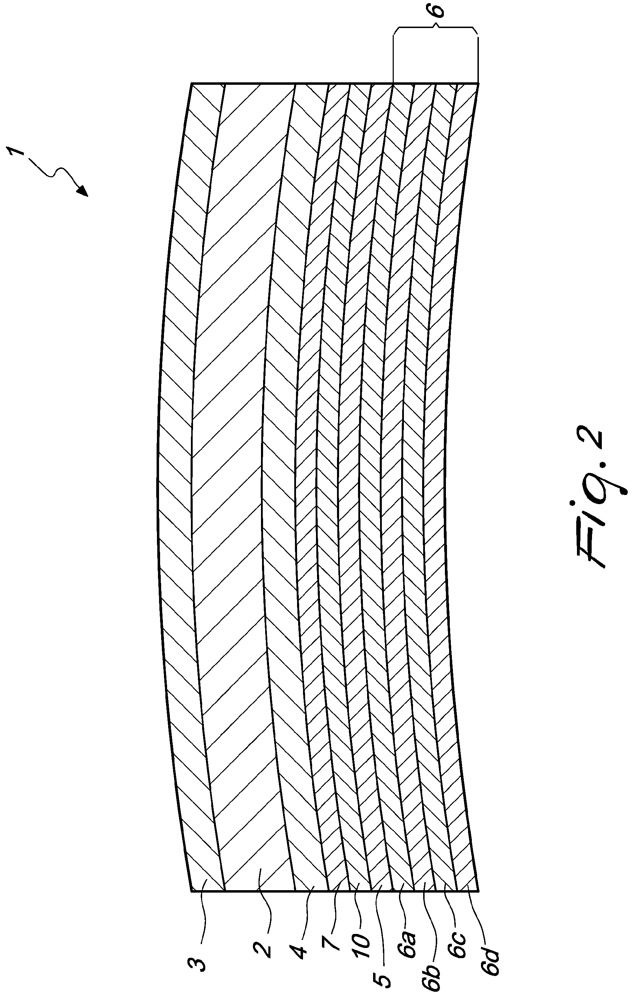

Figure 2 schematically illustrates the lens according to the present invention, according to a second embodiment according to the claimed invention.

It should be noted that the term "lens" is used to mean a lens adapted to be mounted in a frame, and also a mask (where the frame is absent and the mask acts as a front), and also a visor mounted on a helmet.

With reference to the figures, the lens is generally designated by the reference numeral 1, comprises a substrate, of plastic material 2, for example made of nylon, transparent, which is interposed between two layers 3 and 4 of scratch-resistant coating based on organic materials, in particular polysiloxane.

Alternatively the substrate 2 can be made of glass. Furthermore, the substrate, be it plastic material or glass, may or may not have an optical correction.

The two layers of scratch-resistant coating therefore protect the substrate 2 and prevent damage.

The scratch-resistant layer 3 is directed toward the outer side of the lens while the scratch-resistant layer 4 is directed toward the eye of the wearer of the lens.

A layer 5 of precious metal, such as for example gold, silver, platinum or optionally alloys thereof, is arranged at the side of the substrate 2 that is adapted to be directed toward the eye of the wearer of the lens. In substance, the layer of precious metal 5 is arranged on the concave side of the substrate 2.

Conveniently, interposed between the layer of precious metal 5 and the substrate 2 there is a layer of chromium 7 and the previously-described layer of scratch-resistant coating 4.

The function of the layer of chromium 7 is to promote adhesion between the layer of precious metal and the organic substrate.

It could be a layer of chromium, or a layer of silicon monoxide (SiO), or a mixture of both.

Alternatively, other metals could be used.

The layer 7 is to all intents and purposes an adhesion promotion layer.

On top of the layer of precious metal, at the layer directed toward the eye of the user of the lens, an anti-reflective layer 6 is furthermore applied, which can be constituted by a multiplicity of layers, for example 6a-6d.

With reference to the figures, in which the anti-reflective layer 6 is provided by four different layers, the layer 6a is a layer the first function of which is to promote adhesion between the layer of precious metal 5 and the layer 6b, which is a layer of silicon dioxide (SiO₂), otherwise such layer would not adhere to the layer of gold 5 and vice versa.

Furthermore, the layer 6a has a second function, as a layer with a high refractive index for providing the anti-reflective treatment, in a HLHL composition of layers.

Finally, the layer 6a has a third function, to reduce the transmittance of the lens (and therefore make it darker) in order to prevent the user of the lens from being dazzled by the reflection of the precious metal.

Therefore, the layer 6a is the first layer with a high refractive index, the layer 6b is a layer with a low refractive index, the layer 6c is another layer with a high refractive index and the layer 6d is a final layer with a low refractive index. Thus the composition HLHL is created.

The layer 6c, in addition to its first function as a layer with a high refractive index, has a second function, to reduce the transmittance of the lens (and therefore make it darker) in order to prevent the user of the lens from being dazzled by the reflection of the precious metal.

It should be noted that the anti-reflective layer 6 can be constituted by a minimum number of layers corresponding to the structure (HL)n with n equal to one, for example 6a-6b. The layers of material with a high refractive index are for example provided as T_{y}Oₓ, ZrₓO_{y}, etc., while the layers of material with a low refractive index are typically SiO₂ and MgF₂.

The layer 6d has two functions: one is to constitute the second layer with a low refractive index for the bundle of layers 6a-6d that constitute the HLHL structure, and the other one is to protect all the layers from the oxidation process due to the external environment and to mechanical stresses (for example scratches).

Conveniently the layer of precious metal 5 is provided by way of vacuum evaporation techniques.

In the second embodiment, the lens according to the present invention has a gold-red coloring, which is obtained by interposing a layer of copper 10 between the layer of precious metal 5 (in this case made of gold) and the layer adhesion promotion layer 7.

The layer of copper 10 has the twofold function of giving the layer of precious metal in gold 5 a gold-red color and at the same time contributing to the adhesion of the layer of precious metal 5 in conjunction with the adhesion promotion layer 7.

In embodiments not part of the claimed invention, the layer 10 can be made with other materials by way of evaporation (both metals and non-metals) in order to give the gold a different coloring from its characteristic color, for example in order to obtain colorings like gold-purple, gold-green, gold-blue, gold-black, etc.

The lens thus provided makes it possible to protect the layer of precious metal from deterioration phenomena owing to rubbing, impact or aging.

In practice it has been found that the lens thus conceived achieves the intended aim and objects, by making it possible to have a lens with a metallic effect owing to the presence of a layer of precious metal, but which at the same time is made in such a way as to protect the aforementioned layer as much as possible, unlike the solutions for a conventional lens in which a layer of precious metal is used.

Furthermore, the lens according to the invention makes it possible to completely eliminate the bothersome iridescence effect owing to the presence of lacquers on the two faces of the lens.

The lens thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

This application claims priority from Italian Patent Application No. 102018000002744.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multilayer lens (1) for eyeglasses, which comprises a substrate (2) and at least one layer (5) of precious metal, said layer (5) of precious metal being arranged on the concave side of said substrate (2), adapted to be directed toward the eye of the wearer of the lens, wherein said layer of precious metal (5) is protected by an anti-reflective layer (6), said anti-reflective layer (6) being composed of at least two layers (6a-6b), said at least two layers (6a-6b) of said anti-reflective layer (6) comprising an alternation of layers with a high refractive index and with a low refractive index (HL), said anti-reflective layer (6) comprising a first layer (6a), with a high refractive index, for adhesion promotion, which is arranged adjacent to said layer of precious metal (5); said first layer (6a) being configured to reduce the transmittance of the lens (1), and thus to darken said lens (1); said substrate (2) being protected at its faces by a respective layer of scratch-resistant coating (3, 4), said layer of precious metal (5) being deposited on said layer of scratch-resistant coating (4), adapted to be directed toward the eye of the wearer of the lens, following the interposition of an adhesion promotion layer (7); the lens (1) comprising a layer of copper (10) between said layer of precious metal (5) and said adhesion promotion layer (7).

2. The lens according to the preceding claim, **characterized in that** said anti-reflective layer (6) comprises a second layer (6b), with a low refractive index, which is arranged adjacent to said first layer (6a) with a high refractive index, a third layer (6c), with a high refractive index, and a fourth layer (6d), with a low refractive index; said fourth layer (6d) being configured to protect all the layers from the oxidation process due to the external environment and to mechanical stresses.

3. The lens according to one or more of the preceding claims, **characterized in that** said substrate (2) is a substrate of transparent plastic.

4. The lens according to claim 1 or 2, **characterized in that** said substrate (2) is a substrate of glass.

5. The lens according to one or more of the preceding claims, **characterized in that** the layers of scratch-resistant coating (3, 4) arranged to protect the opposite faces of said substrate (2) are layers based on organic materials, in particular on polysiloxane.

6. The lens according to one or more of the preceding claims, **characterized in that** said layer of precious metal (5) is a layer selected from the group constituted by gold, silver, platinum, palladium, ruthenium, rhodium, osmium, iridium or alloys thereof.

7. Eyeglasses, **characterized in that** they comprise one or more lenses (1) according to one or more of the preceding claims.

## Patentansprüche

1. Mehrschichtlinse (1) für eine Brille, wobei die Mehrschichtlinse ein Substrat (2) und wenigstens eine Schicht (5) eines Edelmetalls umfasst, wobei die Schicht (5) eines Edelmetalls auf der konkaven Seite des Substrats (2) angeordnet ist, die ausgelegt ist, in Richtung des Auges des Trägers der Linse gerichtet zu sein, wobei die Schicht eines Edelmetalls (5) durch eine Entspiegelungsschicht (6) geschützt ist, wobei die Entspiegelungsschicht (6) aus wenigstens zwei Schichten (6a-6b) zusammengesetzt ist, wobei die wenigstens zwei Schichten (6a-6b) der Entspiegelungsschicht (6) einen Wechsel von Schichten mit einem hohen Brechungsindex und mit einem niedrigeren Brechungsindex (HL) umfassen, wobei die Entspiegelungsschicht (6) eine erste Schicht (6a) mit einem hohen Brechungsindex für die Haftungsförderung, die benachbart zu der Schicht eines Edelmetalls (5) angeordnet ist, umfasst; wobei die erste Schicht (6a) konfiguriert ist, die Lichtdurchlässigkeit der Linse (1) zu verringern und somit die Linse (1) zu verdunkeln; wobei das Substrat (2) auf seinen Flächen durch eine jeweilige Schicht einer kratzfesten Beschichtung (3, 4) geschützt ist, wobei die Schicht eines Edelmetalls (5) auf der Schicht einer kratzfesten Beschichtung (4), die ausgelegt ist, in Richtung des Auges des Trägers der Linse gerichtet zu sein, gefolgt von dem Einfügen einer Haftvermittlerschicht (7), abgelagert ist; wobei die Linse (1) zwischen der Schicht eines Edelmetalls (5) und der Haftvermittlerschicht (7) eine Schicht aus Kupfer (10) umfasst.

2. Linse nach dem vorhergehenden Anspruch, **dadurch gekennzeichnet, dass** die Entspiegelungsschicht (6) eine zweite Schicht (6b) mit einem niedrigen Brechungsindex, die benachbart zu der ersten Schicht (6a) mit einem hohen Brechungsindex angeordnet ist, eine dritte Schicht (6c) mit einem hohen Brechungsindex und eine vierte Schicht (6d) mit einem niedrigen Brechungsindex umfasst; wobei die vierte Schicht (6d) konfiguriert ist, alle Schichten vor dem Oxidationsprozess wegen der Außenumgebung und mechanischer Spannungen zu schützen.

3. Linse nach einem oder mehreren der vorhergehenden Ansprüche, **dadurch gekennzeichnet, dass** das Substrat (2) ein Substrat eines transparenten Kunststoffs ist.

4. Linse nach Anspruch 1 oder 2, **dadurch gekennzeichnet, dass** das Substrat (2) ein Substrat aus Glas ist.

5. Linse nach einem oder mehreren der vorhergehenden Ansprüche, **dadurch gekennzeichnet, dass** die Schichten aus kratzfester Beschichtung (3, 4), die zum Schützen der gegenüberliegenden Flächen des Substrats (2) angeordnet sind, Schichten auf der Grundlage organischer Materialien, insbesondere Polysiloxan, sind.

6. Linse nach einem oder mehreren der vorhergehenden Ansprüche, **dadurch gekennzeichnet, dass** die Schicht eines Edelmetalls (5) eine Schicht ist, die aus der Gruppe gewählt ist, die durch Gold, Silber, Platin, Palladium, Ruthenium, Rhodium, Osmium, Iridium oder Legierungen davon gebildet ist.

7. Brille, **dadurch gekennzeichnet, dass** sie eine oder mehrere Linsen (1) nach einem oder mehreren der vorhergehenden Ansprüche umfasst.

## Revendications

1. Lentille multicouche (1) pour lunettes, qui comprend un substrat (2) et au moins une couche (5) de métal précieux, ladite couche (5) de métal précieux étant disposée sur le côté concave dudit substrat (2), adaptée pour être dirigée vers l'œil du porteur de la lentille, ladite couche de métal précieux (5) étant protégée par une couche antireflet (6), ladite couche antireflet (6) étant composée d'au moins deux couches (6a-6b), lesdites au moins deux couches (6a-6b) de ladite couche antireflet (6) comprenant une alternance de couches avec un fort indice de réfraction et avec un faible indice de réfraction (HL), ladite couche antireflet (6) comprenant une première couche (6a), avec un fort indice de réfraction, destinée à favoriser l'adhérence, qui est disposée de façon contiguë à ladite couche de métal précieux (5); ladite première couche (6a) étant conçue pour réduire le facteur de transmission de la lentille (1), et ainsi pour assombrir ladite lentille (1); ledit substrat (2) étant protégé au niveau de ses faces par une couche respective de revêtement antirayure (3, 4), ladite couche de métal précieux (5) étant déposée sur ladite couche de revêtement antirayure (4), adaptée pour être dirigée vers l'œil du porteur de la lentille, après l'interposition d'une couche favorisant l'adhérence (7); la lentille (1) comprenant une couche de cuivre (10) entre ladite couche de métal précieux (5) et ladite couche favorisant l'adhérence (7).

2. Lentille selon la revendication précédente, **caractérisée en ce que** ladite couche antireflet (6) comprend une deuxième couche (6b) avec un faible indice de réfraction, qui est disposée de façon contiguë à ladite première couche (6a) avec un fort indice de réfraction, une troisième couche (6c) avec un fort indice de réfraction, et une quatrième couche (6d) avec un faible indice de réfraction; ladite quatrième couche (6d) étant conçue pour protéger toutes les couches contre le processus d'oxydation dû à l'environnement externe et aux contraintes mécaniques.

3. Lentille selon une ou plusieurs des revendications précédentes, **caractérisée en ce que** ledit substrat (2) est un substrat de plastique transparent.

4. Lentille selon la revendication 1 ou 2, **caractérisée en ce que** ledit substrat (2) est un substrat de verre.

5. Lentille selon une ou plusieurs des revendications précédentes, **caractérisée en ce que** les couches de revêtement antirayure (3, 4) disposées pour protéger les faces opposées dudit substrat (2) sont des couches à base de matériaux organiques, en particulier de polysiloxane.

6. Lentille selon une ou plusieurs des revendications précédentes, **caractérisée en ce que** ladite couche de métal précieux (5) est une couche choisie dans le groupe constitué par l'or, l'argent, le platine, le palladium, le ruthénium, le rhodium, l'osmium, l'iridium et les alliages de ceux-ci.

7. Lunettes, **caractérisées en ce qu'**elles comprennent une ou plusieurs lentilles (1) selon une ou plusieurs des revendications précédentes.
